# EUROPEAN PATENT SPECIFICATION

(11) **EP 0 866 627 B1**
(45) Date of publication and mention of the grant of the patent: **06.09.2006**
(21) Application number: 97400629.8
(22) Date of filing: 19.03.1997
(51) Int. Cl.: H04Q 7/30

(54) **Base station system, telecommunication system and method**
Basisstationssystem, Telekommunikationssystem und Verfahren dafür
Système de station de base, système de télécommunications et procédé associé

(43) Date of publication of application: 23.09.1998
(73) Proprietor: ALCATEL, 75008 Paris (FR)
(72) Inventor: Engemann, Frank, 71032 Böblingen (DE)
(74) Representative: Knecht, Ulrich Karl

(56) References cited:
- EP-A- 0 479 255
- EP-A- 0 479 477
- EP-A- 0 647 077
- EP-A- 0 758 189

## Description

### A. Background of the invention

The invention relates to a base station system, a telecommunication system and a method for providing mobile communication, wherein the base station system comprises an in/output for coupling said base station system to an exchange. In more particular, the base station system comprises a further in/output for connecting the base station system with a further base station system.

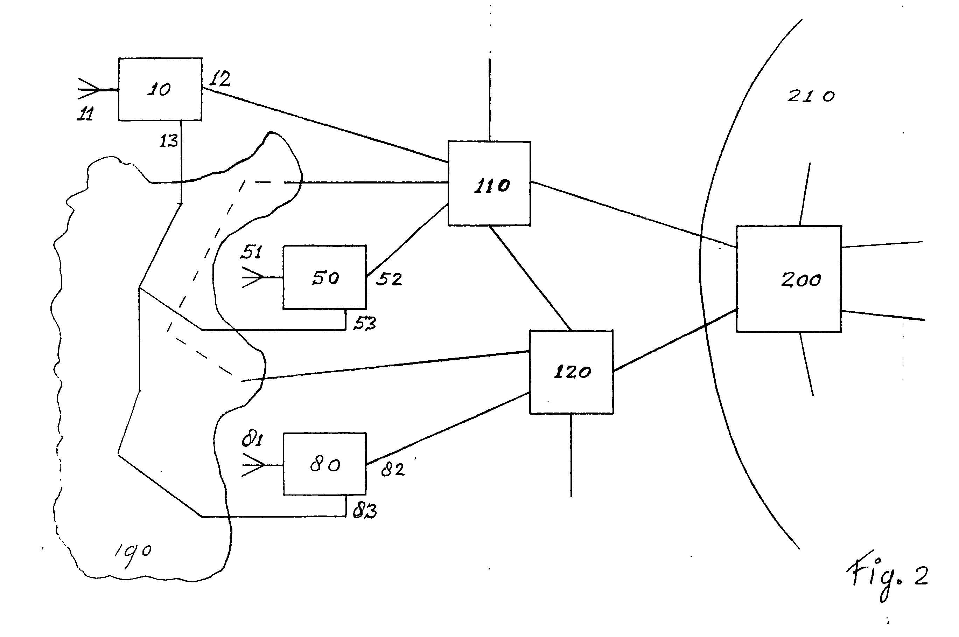

A base station system in general is known from 'The GSM System for Mobile Communications' by Michel Mouly and Marie-Bernadette Pautet. ISBN 2-9507190-0-7, 1992, in particular Chapter 2: Architecture, pages 78-122, more in particular figures 2.8 and 2.11. The exchange is for example a mobile switching center or MSC, of which one side is coupled to a network for fixed telecommunication and/or other MSCs, and of which an other side is coupled to several base station systems. A call between a mobile terminal and a fixed telephone is for example routed via the base station system and the MSC and for example local exchanges, and a call between two mobile terminals is for example routed via the base station system and the MSC and an other MSC and an other base station system. For both calls, due to the mobility of the mobile terminal, the base station system needs to communicate with other base station systems, for example about load indications, frequency allocations, interference measurements and resource information.

The base station systems communicate via one or more MSCs situated between these base station systems, which, inter alia, is inefficient and therefore disadvantageous.

EP 0 758 183 A2 discloses a telecommunication system comprising a plurality of base stations and a plurality of communication devices, in particular DECT handsets. The base stations are interconnected via communication channels of a LAN network. Furthermore, the base stations are equipped with a telephone interface, in particular a RS 232 interface. The handsets communicate with the base stations via an additional channel separate from the communication channels. A communication between a base station and a selected handset is established directly by the additional channel, if the base station is the home base station of the handset. If the base station is a visitor base station of the handset, the communication is established via the additional channel from the handset to the visitor base station and via the communication channels of the LAN network from the visitor base station to the home base station.

European patent application 0479255 discloses a method for handover and route diversity in mobile communication network where a loop transmission line is connecting several base station and used for transmitting messages directly between the base stations. Such messages are for example a receiving level detection request or a receiving level report signal which are transmitted to a central control station through the loop transmission line for evaluation to determine to which base station a communication should be handed over.

### B. Summary of the invention

It is an object of the invention, inter alia, to provide a base station system, a telecommunication system, and a method, which enables a communication with an other base station system in a more efficient way.

This object is achieved by a base station system according to claim 1, a telecommunication system according to claim 4 and a method according to claim 7.

A base station system according to the invention furthermore comprises a first arrangement coupled to a in/output for handling calls and a second arrangement coupled to a further in/output for handling base station information to be exchanged with said other base station system.

The base station comprises the further in/output for coupling the base station system to an other base station system for exchanging base station information.

The base station no longer needs to communicate via one or more MSCs with a other base station system, but it can communicate directly with a other base station system without using one or more MSCs.

It should be noted that it is known to provide a base station system with an other in/output for coupling said base station system with an operation and maintenance center or OMC. Such an other in/output firstly is not intended for direct communication between base station systems and secondly does not solve said problem due to offering an other ineffcient communication as a consequence of the OMC being situated between said base sation systems.

The invention further relates to a telecommunication system comprising at least a base station system and a further base station system and an exchange, which base station system comprises an in/output for coupling the base station system to the exchange, and which further base station system comprises an in/output for coupling the further base station system to the exchange, wherein the base station system and the further base station system each comprise a further in/output for mutually coupling the base station system and the further base station system.

A telecommunication system according to the invention is comprises exchange, the base station system and the further base station system, wherein the bass station system and the further base station system each comprises a first arrangement coupled to the in/output for handling calls and a second arrangement coupled to the further in/output for handling base station information to be exchanged between the base station system and the further base station system.

The invention further relates to a method for exchanging base station information between a base station and a further base station, which base station system comprises an in/output for coupling the base station system to an exchange, which further base station system comprises an in/output for coupling the further base station system to the exchange, the base station system and the further base station system each comprises a further in/output for mutually coupling the base station system and the further base station system.

The method according to the invention, comprises the step of exchanging base station information via the further in/outputs between the base station and the further base station, wherein calls are handled via the first in/output.

A further embodiment of the base station system according to the invention comprises an interface coupled to said further in/output for providing data communication with the other base station system via a packet network.

A further embodiment of the telecommunication system according to the invention comprises the base station system and the further base station system having an interface coupled to said further in/output for providing mutual data communication via a packet network coupled to each further in/output.

Such a packet network (like a General Packet Radio Service Network) offers point-to-point connections as well as point-to-multipoint connections, which is very advantageous.

An embodiment of the method according to the invention comprises the base station system and the further base station system each having an interface coupled to the further in/output, wherein the step of exchanging base station information via the further in/outputs comprising a substep of providing mutual data communication via a packet network coupled to each further in/output.

A further embodiment of the method according to the invention comprises the base station system and the further base station system each having a first arrangement coupled to the in/output for handling calls and a second arrangement coupled to the further in/output for handling base station information, wherein the step of exchanging base station information via the further in/outputs comprising a substep of using both second arrangements for handling said base station information.

### C. References

- 'The GSM System for Mobile Communications' by Michel Mouly and Marie-Bernadette Pautet, ISBN 2-9507190-0-7, 1992, in particular Chapter 2: Architecture, pages 78-122, more in particular figures 2.8 and 2.11
- WO 91/10333.

### D. Description of the drawings

The invention will be explained in greater detail at the hand of an embodiment disclosed in the drawings, whereby
figure 1 discloses an embodiment of a base station system according to the invention, and
figure 2 discloses an embodiment of the telecommunication system according to the invention comprising three base station sytems according to the invention.

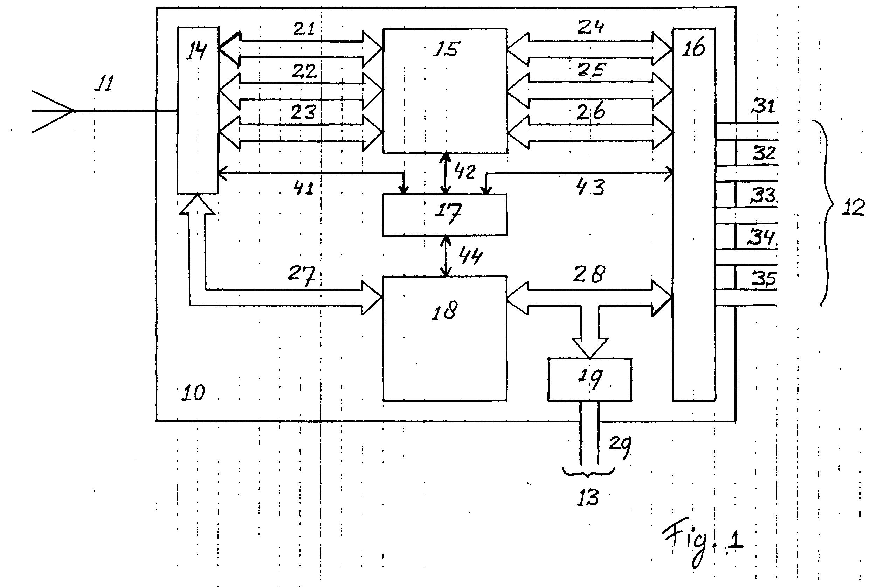

The base station system 10 according to the invention as disclosed in figure 1 comprises a transmitter/receiver 14, of which a first in/output is coupled via a connection 21 to a first in/output of a first arrangement 15 for handling calls. A second in/output and a third in/output of transmitter/receiver 14 are coupled via a connection 22 and a connection 23 respectively to a second in/output and a third in/output of first arrangement 15 respectively. A fourth in/output of transmitter/receiver 14 is coupled via a connection 27 to a first in/output of a second arrangement 18 for handling base station information, like for example load indications, frequency allocations and interference measurements. A fourth in/output of first arrangement 15 is coupled via a connection 24 to a first in/output of a multiplexer 16. A fifth in/output and a sixth in/output of first arrangement 15 are coupled via a connection 25 and a connection 26 respectively to a second in/output and a third in/output of multiplexer 16 respectively. A second in/output of second arrangement 18 is coupled via a connection 28 to a fourth in/output of multiplexer 16 and to a first in/output of an interface 19. An antenna in/output of transmitter/receiver 14 is coupled to an antenna 11.

The base station system 10 further comprises a processor 17, which via a control connection 41 is coupled to a control in/output of transmitter/receiver 14 and which via a control connection 42 is coupled to a control in/output of first arrangement 15 and which via a control connection 43 is coupled to a control in/output of multiplexer 16 and which via a control connection 44 is coupled to a control in/output of second arrangement 18. Multiplexer 16 is further provided with a fifth, sixth, seventh, eighth and nineth in/output which via connections 31, 32, 33, 34 and 35 respectively can be coupled to a switching exchange like an Mobile Switching Center or MSC. These fifth, sixth, seventh, eighth and nineth in/output together form an in/output of base station system 10. Interface 19 is further provided with a second in/output which via a connection 29 can be coupled to a further base station system. This second in/output forms a further in/output of base station system 10.

The telecommunication system according to the invention as disclosed in figure 2 comprises said base station system 10 comprising said antenna 11 and said in/output 12 which is coupled to a Mobile Switching Center (MSC) 110 and said further in/output 13 which is coupled to a further in/output 53 of a further base station system 50 and to a further in/output 83 of a yet further base station system 80 via a packet switched network like a general packet radio service network 190. Further base station system 50 comprises an antenna 51 and an in/output 52 which is coupled to said MSC 110. Yet further base station system 80 comprises an antenna 81 and an in/output 82 which is coupled to a Mobile Switching Center (MSC) 120. MSC 110 and said MSC 120 are mutually coupled directly for handling calls and indirectly via said packet radio service network 190 for exchanging certain information and are each coupled to a local switching exchange 200 which forms part of a network 210 for fixed telecommunication.

The prior art telecommunication system comprising three prior art base station systems (in other words three base station systems 10, 50 and 80 without the further in/outputs 13, 53 and 83 being present) functions as follows.

A call between a first mobile terminal and a fixed telephone is for example routed via base station system 10 and MSC 110 and local switching exchange 200, and a call between the first mobile terminal and a second mobile terminal is for example routed via base station system 10 and MSC 110 and MSC 120 and base station system 80. In both cases, radio signals originating from the first mobile terminal are received via antenna 11 by transmitter/receiver 14, which sends demodulated signals via for example connection 21 to first arrangement 15, which handles these demodulated signals. Then first arrangement 15 sends the handled signals via for example connection 26 and via multiplexer 16 and via connection 34 to MSC 110, etc. and vice versa. In base station system 10, processor 17 controls transmitter/receiver 14, first arrangement 15, multiplexer 16 and second arrangement 18.

During the calls and/or not during the calls second arrangement 18 receives information from transmitter/receiver 14 and/or from multiplexer 16 (and/or from processor 17 and/or from first arrangement 15), which information either can be considered to be base station information or is transformed into base station information via calculations which are made under control of or independently from processor 17. This base station information, which for example comprises load indications, frequency allocations and/or interference measurements, should be exchanged with at least one other base station. In the prior art telecommunication system comprising the three prior art base station systems (in other words three base station systems 10, 50 and 80 without the further in/outputs 13, 53 and 83 being present), this is realised by sending said base station information via connection 28 and multiplexer 16 and in/output 12 (via for example the fifth in/output and connection 31) to MSC 110, which for example sends it to base station system 50 via in/output 52, and which for example sends it to base station system 80 via the packet radio service network 190 and MSC 120 and in/output 82. Therefore, in said prior art telecommunication system, said exchange of said base station information is done inefficiently.

In the telecommunication system according to the invention comprising the three base station systems according to the invention (in other words three base station systems 10, 50 and 80 being provided with the further in/outputs 13, 53 and 83), the exchange of base station information is realised via connection 28 and interface 19 and in/output 13 (via the second in/output of interface 19 and connection 29) and via packet radio service network 190 and in/output 53 and in/output 83. Therefore, in said telecommunication system according to the invention said exchange of said base station information is done more efficiently. In fact, when the base station systems and the MSCs are coupled to the packet radio service network, the exchange of information could be routed completely via said network, whereby for example the coupling between second arrangement 18 and multiplexer 16 inside base station system 10 could be omitted, which reduces the complexity of the base station system, and whereby either at least the complexity of multiplexer 16 could be reduced or multiplexer 16 entirely could be omitted, which further reduces the complexity of the base station system.

Preferably, the base station system according to the invention could be provided with direct addressing means for directly addressing one or more further base station systems by generating one or more addresses belonging to these one or more base station systems and adding these addresses to the base station information to be exchanged (for example as a part of a header of a cell), and/or could be provided with indirect addressing means for indirectly addressing further base station systems by generating one or more codes indicating for example all other base station systems (general broadcast) or a number of base station systems belonging to a certain category (restricted broadcast), and adding these codes to the base station information to be exchanged (for example as a part of a header of a cell). In general at least two kinds of messages can be distinguished: base station system dependent messages (which require direct addressing) and general messages (which require indirect addressing). Said addressing means could be realised by using a table memory inside second arrangement 18, which table memory comprises for example a left column for storing messages belonging to the base station information and a right column for storing corresponding addresses, or could be realised by using processor 17, or could be realised by using further processor means inside second arrangement 18.

The term base station system could be regarded to correspond to either a so-called base transceiver station or a so-called base station controller or a combination of the so-called base transceiver station and the so-called base station controller. In general, the base station system according to the invention provides mobile communication and comprises a first in/output for coupling said base station system to an exchange and a second in/output for coupling said base station system to an other base station system, preferably via interfaces coupled to the second in/outputs and a packet radio service network, and/or preferably by using a first arrangement coupled to the first in/output for handling calls and a second arrangement coupled to the second in/output for handling base station information to be exchanged with said other base station system.

The term in/output should everywhere be read as input and/or output. Instead of providing a base station system with two in/outputs, the base station system could be provided with a bus system, of which a first part is coupled to a switching exchange and of which a second part is coupled to (a bus system of) an other base station system. This of course corresponds to providing said base station system with two in/outputs, because of the possibility of a direct exchange of base station information between two or more base station systems without using a switching exchange like a MSC.

The completely separated first and second arrangements inside a base station system offer a great advantage. In case both arrangements are controlled by and/or form part of the same processor system, control becomes easier due to less interactions. In case both arrangements are controlled by and/or form part of different processor systems, at least a part of this use of different processor systems has become possible due to said separation.

## Claims

1. Base station system (10) for providing mobile communication, which base station system (10) comprises an in/output (12) for coupling said base station system (10) to an exchange (110, 120, 200) and a further in/output (13) for coupling said base station system (10) to an other base station system (50, 80), **characterised in that** the base station system(10) further comprises a first arrangement (15) coupled to said in/output (12) for handling calls and a second arrangement (18) coupled to said further in/output (13) for handling base station information to be exchanged with said other base station system (50,80) over a general pocket radio service network (190).

2. Base station system (10) according to claim 1, **characterised in that** the base station system (10) comprises an interface (19) coupled to said further in/output (13) for providing data communication with said other base station system (50, 80) via a general packet radio service network (190).

3. Telecommunication system comprising at least a base station system (10) and a further base station system (50, 80) and an exchange (1 10, 120, 200), which base station system (10) comprises an in/output (12) for coupling said base station system (10) to said exchange(1 10, 200), and which further base station system (50, 80) comprises an in/output (52, 82) for coupling said further base station system (50, 80) to said exchange (110, 120, 200), wherein the base station system (10) and the further base station system (50, 80) each comprise a further in/output (13, 53, 83) for mutually coupling said base station system (10) and said further base station system (50, 80), **characterised in that** the base station system (10) and the further base station system (50, 80) each comprise a first arrangement (15) coupled to said in/output (12, 52, 82) for handling calls and a second arrangement (18) coupled to said further in/output (13, 53, 83) for handling base station information to be exchanged between said base station system (10) and said further base station system (50, 80) over a general packet radio service network (190).

4. Telecommunicationsystem according to claim 3, **characterised in that** the base station system (10) and the further base station system (50, 80) each comprise an interface (19) coupled to said further in/output (13, 53, 83) for providing mutual data communication via a general packet radio service network (190)coupled to each further in/output (13, 53, 83).

5. Method for exchanging base station information between a base station system (10) and a further base station system (50, 80), which base station system (10) comprises an in/output (12) for coupling said base station system (10) to an exchange (110, 120, 200), and which further base station system (50, 80) comprises an in/output (52, 82) for coupling said further base station system (50, 80) to said exchange (110, 120, 200), wherein the base station system (10) and the further base station system (50, 80) each comprise a further in/output (13, 53, 83) for mutually coupling said base station system (10) and said further base station system (50, 80), **characterised in that**, the method comprising the step of exchanging said base station information via said further in/outputs (13, 53, 83) over a general packet radio service network (190), wherein calls ore handled via the first in/output (12, 52, 82).

6. Method according to claim 5, **characterised in that** the base station system (10) and the further base station system (50, 80) each comprise an interface (19) coupled to said further in/output (13, 53, 83), said step of exchanging said base station information via said further in/outputs (13, 53, 83) comprising a substep of providing mutual data communication via a general packet radio service network (190) coupled to each further in/output (13, 53, 83).

7. Method according to claim 5 or 6, **characterised in that** the base station system (10) and the further base station system (50, 80) each comprise a first arrangement (15) coupled to said in/output (12, 52, 82) for handling calls and a second arrangement (18) coupled to said further in/output (13, 53, 83) for handling said base station information, said step of exchanging said base station information via said further in/outputs (13, 53, 83) comprising a substep of using both second arrangements (18) for handling said base station information.

## Patentansprüche

1. Basisstationssystem (10) zum Bereitstellen der Mobilkommunikation, deren Basisstationssystem (10) einen Eingang/Ausgang (12) zum Verbinden des Basisstationssystems (10) mit einer Vermittlungsstelle (110, 120, 200) und einen weiteren Eingang/Ausgang (13) zum Verbinden des Basisstationssystems (10) mit einem anderen Basisstationssystem (50, 80) umfaßt, **dadurch gekennzeichnet, daß** das Basisstationssystem (10) außerdem eine erste Anordnung (15), die mit dem Eingang/Ausgang (12) zur Behandlung von Anrufen verbunden ist, und eine zweite Anordnung (18), die mit dem weiteren Eingang/Ausgang (13) zur Bearbeitung der Basisstationsinformationen verbunden ist, die mit dem anderen Basisstationssystem (50, 80) über ein Netz des allgemeinen paketvermittelten Datenfunkdienstes (190) auszutauschen sind, umfaßt.

2. Basisstationssystem (10) nach Anspruch 1, **dadurch gekennzeichnet, daß** das Basisstationssystem (10) eine Schnittstelle (19) umfaßt, die mit dem weiteren Eingang/Ausgang (13) zum Bereitstellen der Datenkommunikation mit dem anderen Basisstationssystem (50, 80) über ein Netz des allgemeinen paketvermittelten Datenfunkdienstes (190) verbunden ist.

3. Telekommunikationssystem, umfassend mindestens ein Basisstationssystem (10) und ein weiteres Basisstationssystem (50, 80) und eine Vermittlungsstelle (110, 120, 200), deren Basisstationssystem (10) einen Eingang/Ausgang (12) zum Verbinden des Basisstationssystems (10) mit der vermittlungsstelle (110, 200) umfaßt, und deren weiteres Basisstationssystem (50, 80) einen Eingang/Ausgang (52, 82) zum Verbinden des weiteren Basisstationssystems (50, 80) mit der Vermittlungsstelle (110, 120, 200) umfaßt, in welchem das Basisstationssystem (10) und das weitere Basisstationssystem (50, 80) jedes einen weiteren Eingang/Ausgang (13, 53, 83) zum gegenseitigen Verbinden des Basisstationssystems (10) und des weiteren Basisstationssystems (50, 80) umfassen, **dadurch gekennzeichnet, daß** das Basisstationssystem (10) und das weitere Basisstationssystem (50, 80) jedes eine erste Anordnung (15), die mit dem Eingang/Ausgang (12, 52, 82) zur Behandlung von Anrufen verbunden ist, und eine zweite Anordnung (18), die mit dem weiteren Eingang/Ausgang (13, 53, 83) zur Bearbeitung der Basisstationsinformationen verbunden ist, die zwischen dem Basisstationssystem (10) und dem weiteren Basisstationssystem (50, 80) über ein Netz des allgemeinen paketvermittelten Datenfunkdienstes (190) auszutauschen sind, umfassen.

4. Telekommunikationssystem nach Anspruch 3, **dadurch gekennzeichnet, daß** das Basisstationssystem (10) und das weitere Basisstationssystem (50, 80) jedes eine Schnittstelle (19) umfassen, die mit dem weiteren Eingang/Ausgang (13, 53, 83) zum Bereitstellen der gegenseitigen Datenkommunikation über ein Netz des allgemeinen paketvermittelten Datenfunkdienstes (190) verbunden ist, das mit jedem weiteren Eingang/Ausgang (13, 53, 83) verbunden ist.

5. Verfahren zum Austauschen der Basisstationsinformationen zwischen einem Basisstationssystem (10) und einem weiteren Basisstationssystem (50, 80), dessen Basisstationssystem (10) einen Eingang/Ausgang (12) zum Verbinden des Basisstationssystems (10) mit einer Vermittlungsstelle (110, 120, 200) umfaßt, und dessen weiteres Basisstationssystem (50, 80) einen Eingang/Ausgang (52, 82) zum Verbinden des weiteren Basisstationssystems (50, 80) mit der Vermittlungsstelle (110, 120, 200) umfaßt, in welchem das Basisstationssystem (10) und das weitere Basisstationssystem (50, 80) jedes einen weiteren Eingang/Ausgang (13, 53, 83) zum gegenseitigen Verbinden des Basisstationssystems (10) und des weiteren Basisstationssystems (50, 80) umfassen, **dadurch gekennzeichnet, daß** das Verfahren den Schritt des Austauschens der Basisstationsinformationen über weitere Eingänge/Ausgänge (13, 53, 83) über ein Netz des allgemeinen paketvermittelten Datenfunkdienstes (190) umfaßt, in welchem die Anrufe über den ersten Eingang/Ausgang (12, 52, 82) bearbeitet werden.

6. verfahren nach Anspruch 5, **dadurch gekennzeichnet, daß** das Basisstationssystem (10) und das weitere Basisstationssystem (50, 80) jedes eine Schnittstelle (19) umfassen, die mit dem weiteren Eingang/Ausgang (13, 53, 83) verbunden ist, wobei der Schritt des Austauschens der Basisstationsinformationen über die weiteren Eingänge/Ausgänge (13, 53, 83) einen Unterschritt des Bereitstellens der gegenseitige Datenkommunikation über ein Netz des allgemeinen paketvermittelten Datenfunkdienstes (190) umfaßt, das mit jedem weiteren Eingang/Ausgang (13, 53, 83) verbunden ist.

7. Verfahren nach Anspruch 5 oder 6, **dadurch gekennzeichnet, daß** das Basisstationssystem (10) und das weitere Basisstationssystem (50, 80) jedes eine erste Anordnung (15), die mit dem Eingang/Ausgang (12, 52, 82) zur Behandlung von Anrufen verbunden und eine zweite Anordnung (18), die mit dem weiteren Eingang/Ausgang (13, 53, 83) zur Bearbeitung der Basisstationsinformationen verbunden ist, umfaßt, wobei der Schritt der Austauschens der Basisstationsinformationen über die weiteren Eingänge/Ausgänge (13, 53, 83) einen Unterschritt der Verwendung beider zweiter Anordnungen (18) zur Bearbeitung der Basisstationsinformationen umfaßt.

## Revendications

1. Système de station de base (10) pour fournir une communication mobile, lequel système de station de base (10) comprend une entrée/sortie (12) pour connecter ledit système de station de base (10) à un central (110, 120, 200) et une entrée/sortie supplémentaire (13) pour connecter ledit système de station de base (10) à un autre système de station de base (50, 80), **caractérisé en ce que** le système de station de base (10) comprend en plus un premier arrangement (15) connecté à ladite entrée/sortie (12) pour traiter les appels et un deuxième arrangement (18) connecté à ladite entrée/sortie supplémentaire (13) pour traiter les informations de station de base à échanger avec ledit autre système de station de base (50, 80) sur un réseau général de service de radiodiffusion à paquets (190).

2. Système de station de base (10) selon la revendication 1, **caractérisé en ce que** le système de station de base (10) comprend une interface (19) connectée à ladite entrée/sortie supplémentaire (13) pour fournir la communication de données avec ledit autre système de station de base (50, 80) par le biais d'un réseau général de service de radiodiffusion à paquets (190).

3. Système de télécommunication comprenant au moins un système de station de base (10) et un système de station de base supplémentaire (50, 80) et un central (110, 120, 200), lequel système de station de base (10) comprend une entrée/sortie (12) pour connecter ledit système de station de base (10) audit central (110, 200) et lequel système de station de base supplémentaire (50, 80) comprend une entrée/sortie (52, 82) pour connecter ledit système de station de base supplémentaire (50, 80) audit central (110, 120, 200), le système de station de base (10) et le système de station de base supplémentaire (50, 80) comprenant chacun une entrée/sortie supplémentaire (13, 53, 83) pour la connexion mutuelle dudit système de station de base (10) et dudit système de station de base supplémentaire (50, 80), **caractérisé en ce que** le système de station de base (10) et le système de station de base supplémentaire (50, 80) comprennent chacun un premier arrangement (15) connecté à ladite entrée/sortie (12, 52, 82) pour traiter les appels et un deuxième arrangement (18) connecté à ladite entrée/sortie (13, 53, 83) pour traiter les informations de station de base à échanger entre ledit système de station de base (10) et ledit système de station de base supplémentaire (50, 80) sur un réseau général de service de radiodiffusion à paquets (190).

4. Système de télécommunication selon la revendication 3, **caractérisé en ce que** le système de station de hase (10) et le système de station de base supplémentaire (50, 80) comprennent chacun une interface (19) connectée avec ladite entrée/sortie (13, 53, 83) pour fournir une communication de données mutuelle par le biais d'un réseau général de service de radiodiffusion à paquets (190) connecté pour chaque entrée/sortie supplémentaire (13, 53, 83).

5. Procédé pour échanger des informations de station de base entre un système de station de base (10) et un système de station de base supplémentaire (50, 80), lequel système de station de base (10) comprend une entrée/sortie (12) pour connecter ledit système de station de base (10) à un central (110, 120, 200) et lequel système de station de base supplémentaire (50, 80) comprend une entrée/sortie (52, 82) pour connecter ledit système de station de base supplémentaire (50, 80) audit central (110, 120, 200), le système de station de base (10) et le système de station de base supplémentaire (50, 80) comprenant chacun une entrée/sortie supplémentaire (13, 53, 83) pour la connexion mutuelle dudit système de station de base (10) et dudit système de station de base supplémentaire (50, 80), **caractérisé en ce que** le procédé comprend l'étape d'échange des dites informations de station de base par le biais des dites entrées/sorties supplémentaires (13, 53, 83) entre la station de base et la station de base supplémentaire sur un réseau général de service de radiodiffusion à paquets (190), les appels étant traités par le biais de la première entrée/sortie (12, 52, 82).

6. Procédé selon la revendication 5, **caractérisé en ce que** le système de station de base (10) et le système de station de base supplémentaire (50, 80) comprennent chacun une interface (19) connectée à ladite entrée/sortie supplémentaire (13, 53,8 3), ladite étape d'échange d'informations de station de base par le biais des dites entrées/sorties supplémentaires (13, 53, 83) comprenant une sous-étape de fourniture d'une communication de données mutuelle par le biais d'un réseau général de service de radiodiffusion à paquets (190) connecté à chaque entrée/sortie supplémentaire (13, 53, 83).

7. Procédé selon la revendication 5 ou 6, **caractérisé en ce que** le système de station de base (10) et le système de station de base supplémentaire (50, 80) comprennent chacun un premier arrangement (15) connecté à ladite entrée/sortie (12, 52, 82) pour traiter les appels et un deuxième arrangement (18) connecté à ladite entrée/sortie supplémentaire (13, 53, 83) pour traiter lesdites informations de station de base, ladite étape d'échange des dites informations de station de base par le biais des dites entrées/sorties supplémentaires (13, 53, 83) comprenant une sous-étape d'utilisation des deux deuxièmes arrangements (18) pour traiter lesdites informations de station de base.
